# FASCICULE DE BREVET EUROPEEN

(11) **EP 2 627 424 B1**
(45) Date de publication et mention de la délivrance du brevet: **06.01.2016**
(21) Numéro de dépôt: 11776894.5
(22) Date de dépôt: 10.10.2011
(51) Int. Cl.: B01D 53/26, B01F 3/04, F25J 3/02, B01D 3/16, E21B 43/34, B01D 3/00, B01D 53/18

(54) **INSTALLATION DE MISE EN CONTACT ENTRE UN GAZ ET UN LIQUIDE POUR SUPPORT FLOTTANT**
EINHEIT ZUR HERSTELLUNG EINES KONTAKTES ZWISCHEN EINEM GAS UND EINER FLÜSSIGKEIT FÜR EINE SCHWIMMENDE PLATTFORM
UNIT FOR ESTABLISHING CONTACT BETWEEN A GAS AND A LIQUID FOR A FLOATING PLATFORM

(30) Priorité: 11.10.2010 FR 1058250
(43) Date de publication de la demande: 21.08.2013
(73) Titulaire: Total S.A., 92400 Courbevoie (FR)
(72) Inventeur: CHRETIEN, Denis, F-75012 Paris (FR)
(74) Mandataire: Hirsch & Associés
(86) Numéro de dépôt international: PCT/IB2011/054463
(87) Numéro de publication internationale: WO 2012/049615

(56) Documents cités:
- EP-A2- 1 987 867
- US-A1- 2004 020 238

## Description

### DOMAINE TECHNIQUE

L'invention concerne une installation (de type colonne) pour la mise en contact de liquide et de gaz particulièrement appropriée à une utilisation sur un support flottant. Elle a pour objet de limiter les effets du mouvement du support flottant sur l'efficacité du contact liquide-gaz.

L'invention s'applique particulièrement au lavage du gaz naturel par une solution basique en vue d'en extraire les composés acides (gaz carbonique et hydrogène sulfuré). Elle s'applique également au séchage du gaz par contact entre celui-ci et un liquide hygroscopique tel que le triéthylèneglycol (TEG) ou le diéthylèneglycol (DEG) ainsi qu'aux colonnes de régénération de ces liquides. Elle trouve également à être appliquée puor la distillation d'hydrocarbures.

### ARRIERE-PLAN TECHNIQUE

L'exploitation des hydrocarbures en mer conduit à la mise en oeuvre de divers procédés de traitement sur des plateformes pétrolières. Toutefois, lorsque la profondeur de la mer est trop grande, l'utilisation de plateformes fixes n'est pas possible et on a recours à des supports flottants couramment appelés FPSO (« Floating Production Storage and Off-loading »). Ces supports flottants sont soumis aux mouvements de la mer qu'ils transmettent aux équipements qu'ils supportent.

Parmi ceux-ci, les colonnes, qu'il s'agisse de colonnes de distillation ou d'absorbeurs, sont parmi les plus sensibles aux mouvements. En effet, l'efficacité de ces équipements dépend de la qualité du contact entre le liquide qui descend et la vapeur qui monte dans les colonnes.

La méthode la plus classique pour établir un bon contact entre le liquide et la vapeur consiste à forcer le passage du gaz par des orifices ménagés dans un plateau sur lequel s'écoule le liquide. Toutefois, dans de telles colonnes à plateaux, la qualité du contact entre le liquide et la vapeur dépend de l'horizontalité des plateaux ; un angle, même faible par rapport à l'horizontale, peut conduire à assécher une partie du plateau en liquide, qui n'assure alors plus le contact entre le liquide et la vapeur.

C'est pourquoi les exploitants des usines sur support flottant préfèrent aux plateaux les garnissages en vrac ou structurés. Le document FR 2777533 décrit toutefois une structure maritime flottante présentant un garnissage structuré de géométrie particulière destiné à réduire l'impact des oscillations marines sur le fonctionnement de la structure.

Les garnissages en vrac sont des pièces métalliques ou en céramique qui sont disposées de façon à remplir la colonne sur toute sa section, de façon désordonnée. Leur forme complexe assure un bon contact entre le liquide et la vapeur.

Les garnissages structurés sont constitués de plaques formées et agencées ensemble de façon à assurer le passage du gaz et liquide avec un bon contact.

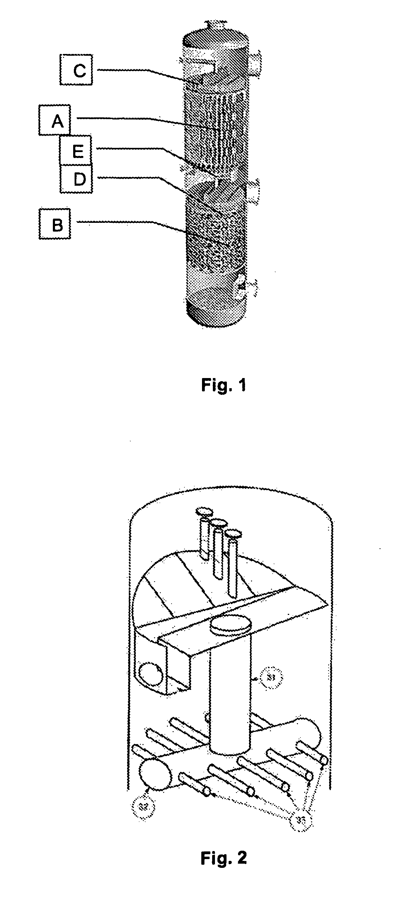

La **figure 1** montre un agencement classique de colonne équipée de garnissage. La configuration est similaire pour les garnissages désordonnés et les garnissages structurés. La colonne comprend ici deux lits A et B de garnissages. Ils sont arrosés de liquide grâce aux distributeurs C et D qui en assurent la répartition sur l'ensemble de la section de la colonne. Un collecteur E recueille le liquide issu du lit A ; le liquide est ensuite distribué par le distributeur D sur le lit B.

Le bon fonctionnement des garnissages suppose que le liquide soit régulièrement réparti sur toute la section de la colonne afin d'éviter des zones sèches qui feraient qu'une partie de la vapeur ascendante ne serait pas en contact avec le liquide.

Dans les distributeurs de liquide classiques, le liquide provenant du haut de la colonne arrive dans une goulotte dont le fond est percé de trous. Chacun de ces trous est en regard d'une goulotte secondaire qu'il alimente en liquide. Les goulottes secondaires, elles-mêmes percées en leur fond de trous de répartition, assurent un arrosage uniforme de la section de la colonne.

Par ailleurs, dans les distributeurs de liquide classiques, les goulottes sont ouvertes au sommet et le niveau liquide qui s'établit à l'intérieur est également soumis aux mouvements du FPSO. Il s'ensuit que, selon l'inclinaison, les trous de répartition sont couverts par une hauteur plus ou moins grande de liquide. Le débit à travers chaque trou dépendant de la hauteur de liquide qui le noie, les débits ne sont donc pas identiques, ce qui conduit à un arrosage irrégulier de la section de la colonne. Certains orifices de distribution peuvent même ne pas être submergés de liquide, ce qui conduit à des zones sèches dans les garnissages. La qualité du contact liquide / vapeur s'en trouve donc affectée.

Le document US 2008/0271983 propose de modifier le distributeur liquide de façon à assurer une distribution régulière du liquide sur la totalité de la section de la colonne quelle que soit l'inclinaison. On en voit une illustration sur la **figure 2**, tirée de ce document.

Le liquide est distribué sur la section de la colonne au moyen de goulottes principales 32 et secondaires 33 qui, contrairement aux distributeurs classiques, sont fermées. Chaque goulotte principale 32 est alimentée par un tube vertical 31. Les goulottes sont percées sur leur face inférieure d'orifices qui assurent la distribution du liquide, dont le diamètre est calculé de façon que le niveau du liquide s'établisse assez haut dans le tube vertical 31. Ainsi, les différences de pression qui pourraient apparaître au droit de chacun des orifices du fait de l'inclinaison de la colonne deviennent négligeables devant la hauteur hydrostatique produite par le niveau liquide dans le tube vertical 31. Une répartition uniforme du liquide peut ainsi être assurée sur la totalité de la section de la colonne. Ces distributeurs sont qualifiés de distributeurs sous pression.

Toutefois, le principal inconvénient de ce dispositif réside dans la hauteur de liquide qui est nécessaire dans le tube vertical 31. En effet, pour que le dispositif soit efficace, cette hauteur doit être nettement supérieure aux variations de hauteur entre les différentes parties des goulottes qui résultent de l'inclinaison de la colonne. La hauteur du tube vertical 31 atteint donc couramment 3 à 4 m.

De plus, lorsque la colonne est inclinée, le liquide tend, au sein du garnissage, à s'accumuler du coté vers lequel penche la colonne jusqu'à, éventuellement, rencontrer la virole sur laquelle il ruisselle sans retourner vers l'intérieur du garnissage. L'uniformité de la distribution liquide obtenue grâce au distributeur sous pression est ainsi rompue. Afin d'éviter cet effet néfaste, il est nécessaire de procéder environ tous les 4 à 5 m à la collecte du liquide et à sa redistribution afin d'éliminer les effets de bord.

Du fait de ce qui précède, la hauteur d'une colonne sur le modèle de celle décrite dans le document US 2008/0271983 est nettement plus grande qu'une colonne standard, à débit égal. Cela aboutit à des contraintes d'encombrement et de poids qui sont difficilement compatibles avec les contraintes d'un environnement exigu tel que celui des supports flottants.

Par ailleurs il est connu de US-A-2004/0020238 un dispositif comprenant un distributeur de liquide en communication de fluide avec une colonne de séparation liquide/vapeur laquelle colonne peut être inclinée par rapport à la direction verticale. Le distributeur de liquide comprend une première zone de distribution et un second distributeur secondaire. La première zone de distribution est en communication de fluide avec le second distributeur. Le second distributeur comporte une pluralité d'ouvertures pour mettre en communication de fluide le distributeur de liquide et la colonne. La distance entre les deux ouvertures les plus éloignées du deuxième distributeur est telle que le distributeur fournit, pour chaque angle d'inclinaison, une déviation standard du débit de liquide à travers les ouvertures du deuxième distributeur inférieure à une valeur seuil, fonction du degré de séparation liquide-vapeur souhaitée. La différence de débit entre les ouvertures de plus faible débit et les ouvertures de plus grand débit est inférieure, pour chaque angle, à une deuxième valeur seuil fonction de degré de séparation liquide-vapeur souhaitée.

Par conséquent, il existe un besoin de concevoir de nouvelles installations de mise en contact de gaz et de liquide susceptibles de fonctionner efficacement sur un support flottant malgré les mouvements de celui-ci, et présentant des dimensions plus réduites que les installations de l'état de la technique.

### RESUME DE L'INVENTION

L'invention concerne en premier lieu une installation de mise en contact entre un liquide et un gaz, comprenant :
- une enceinte comportant un axe vertical ;
- une première série de sections de contact disposées le long de l'axe vertical de l'enceinte ;
- une deuxième série de sections de contact disposées le long de l'axe vertical de l'enceinte de manière alternée par rapport aux sections de contact de la première série ;
- un système de circulation de liquide adapté à faire circuler un liquide dans les sections de contact de la première série d'une part et dans les sections de contact de la deuxième série d'autre part, de façon séparée.

Selon un mode de réalisation, chaque section de contact comprend un système de distribution de liquide, un système de collecte de liquide et un garnissage disposé entre le système de distribution de liquide et le système de collecte de liquide.

Selon un mode de réalisation, laquelle le garnissage est de type structuré ou en vrac.

Selon un mode de réalisation, l'installation comprend des conduites de liaison adaptées à transporter le liquide entre les sections de contact successives de la première série d'une part, et entre les sections de contact successives de la deuxième série d'autre part.

Selon un mode de réalisation, les conduites de liaison entre les sections de contact de la première série traversent les sections de contact de la deuxième série ; et les conduites de liaison entre les sections de contact de la deuxième série traversent les sections de contact de la première série.

Selon un mode de réalisation, les conduites de liaison sont disposées au moins en partie à l'extérieur de l'enceinte.

Selon un mode de réalisation, l'installation comprend :
- une première conduite d'amenée de liquide alimentant une section de contact de la première série ;
- une deuxième conduite d'amenée de liquide alimentant une section de contact de la deuxième série ;
- des moyens de collecte de liquide à une extrémité inférieure de l'enceinte. Selon un mode de réalisation, l'installation comprend :
- une conduite d'amenée de gaz unique à une extrémité inférieure de l'enceinte ;
- une conduite de collecte de gaz unique à une extrémité supérieure de l'enceinte.

Selon un mode de réalisation, l'installation est une installation de distillation ou une installation de séchage de mélange gazeux ou une installation de désacidification de mélange gazeux, et de préférence est une installation de distillation d'hydrocarbures ou une installation de séchage de gaz naturel ou une installation de désacidification de gaz naturel.

L'invention concerne également un procédé de mise en contact d'un liquide et d'un gaz, comprenant l'alimentation d'une installation telle que décrite ci-dessus en gaz et en liquide, et éventuellement la collecte de gaz et de liquide issus de l'installation.

Selon un mode de réalisation, ce procédé est un procédé de désacidification de mélange gazeux, dans lequel le gaz alimentant l'installation est de préférence du gaz naturel et le liquide alimentant l'installation est une solution basique, comprenant de préférence un composé amine.

Selon un autre mode de réalisation, ce procédé est un procédé de séchage de mélange gazeux, dans lequel le gaz alimentant l'installation est de préférence du gaz naturel et le liquide alimentant l'installation est un liquide hygroscopique, comprenant de préférence un composé glycol.

Selon un autre mode de réalisation, ce procédé est un procédé de distillation d'hydrocarbures.

Selon un mode de réalisation, ce procédé est mis en oeuvre en mer sur un support flottant.

La présente invention permet de surmonter les inconvénients de l'état de la technique. Elle fournit plus particulièrement une installation de mise en contact de gaz et de liquide susceptible de fonctionner efficacement sur un support flottant (malgré les mouvements de celui-ci) et pouvant avoir des dimensions plus réduites que les dispositifs de l'état de la technique (et notamment ceux décrits dans le document US 2008/0271983).

Ceci est accompli grâce à un agencement alterné des lits de garnissage et des distributeurs les alimentant, de façon à utiliser la totalité du volume disponible de la colonne.

### BREVE DESCRIPTION DES FIGURES

La **figure 1** représente de manière schématique un contacteur à garnissage classique (état de la technique).
La **figure 2** représente de manière schématique un détail d'un contacteur pour support flottant selon l'état de la technique (document US 2008/0271983).
La **figure 3** représente de manière schématique un mode de réalisation d'une installation selon l'invention.
La **figure 4** représente de manière schématique un autre mode de réalisation d'une installation selon l'invention.
La **figure 5** représente de manière schématique une unité de désacidification de gaz naturel.

### DESCRIPTION DE MODES DE REALISATION DE L'INVENTION

L'invention est maintenant décrite plus en détail et de façon non limitative dans la description qui suit.

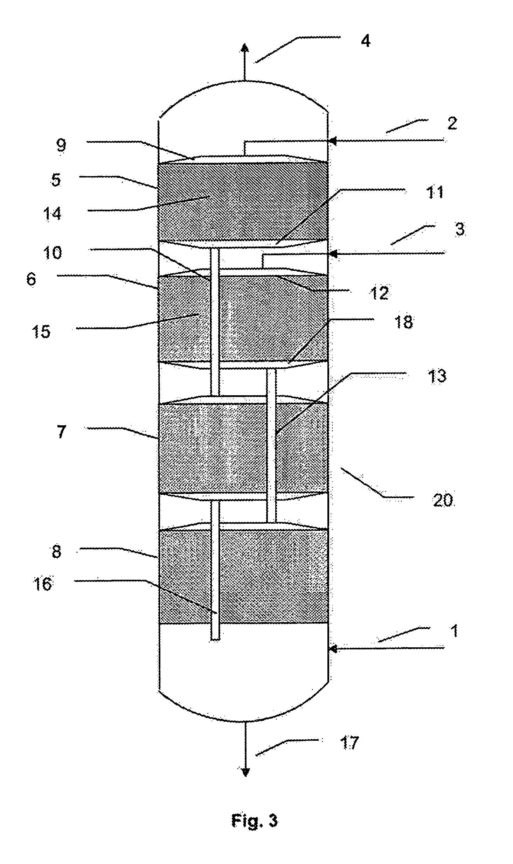

Un premier mode de réalisation est illustré sur la **figure 3**. Ce mode de réalisation concerne préférentiellement une colonne de lavage avec une solution à base d'un composé amine, pour l'épuration des gaz acides (principalement gaz carbonique et hydrogène sulfuré) contenus dans le gaz naturel. De préférence, la colonne est une colonne à contre-courant.

La colonne comprend une enceinte 20 (ou virole) définissant un axe vertical. Par exemple, l'enceinte 20 peut être de forme essentiellement cylindrique.

Le gaz naturel à traiter alimente la colonne en pied par l'intermédiaire d'une conduite d'amenée de gaz 1. Le liquide (solution d'amine pauvre, ou régénérée) est introduite en tête de la colonne par une première conduite d'amenée de liquide 2 et une deuxième conduite d'amenée de liquide 3. Le débit de chacune de ces alimentations est réduit d'environ la moitié par rapport à l'alimentation unique qui est utilisée dans l'état de la technique. Le gaz épuré est récupéré au sommet de la colonne par une conduite de collecte de gaz 4.

Des sections de contact 5, 6, 7, 8 sont disposées le long de l'axe vertical de la colonne. Chaque section de contact 5, 6, 7, 8 est adaptée à promouvoir le contact entre le gaz et le liquide, et elle comprend donc un lit de garnissage 14, 15 (qui peut être un garnissage structuré ou en vrac).

On distingue une première série de sections de contact 5, 7 et une deuxième série de sections de contact 6, 8, les deux séries étant disposées de façon alternée. Ainsi, toute section de contact adjacente à une section de contact de la première série appartient à la deuxième série ; et de même toute section de contact adjacente à une section de contact de la deuxième série appartient à la première série.

Dans l'exemple représenté, de la tête vers le pied de la colonne sont successivement disposées : une première section de contact 5 de la première série, une première section de contact 6 de la deuxième série, une deuxième section de contact 7 de la première série, et enfin une deuxième section de contact 8 de la deuxième série.

Le nombre total de sections de contact peut être pair ou impair. Il y a au moins trois sections de contact au total (auquel cas une des séries comprend une seule section de contact, encadrée par deux sections de contact de l'autre série). Avantageusement, le nombre total de sections de contact peut être fixé à 4 ou 5.

Le liquide est distribué en tête de chaque section de contact 5, 6, 7, 8 par un système de distribution de liquide 9, 12, et collecté en pied de chaque section de contact 5, 6 par un système de collecte de liquide 11, 18.

L'installation est prévue de telle sorte que le liquide circule séparément (ou indépendamment) dans la colonne d'une part dans les sections de contact 5, 7 de la première série, et d'autre part dans les sections de contact 6, 8 de la deuxième série. Des conduites de liaison 10, 13 permettent la circulation du liquide entre deux sections de contact successives au sein de chaque série. Autrement dit, il n'y pas d'échange de liquide entre la première série et la deuxième série.

Plus précisément, dans la situation illustrée, la première conduite d'amenée de liquide 2 alimente le système de distribution 9 de la première section de contact 5 de la première série. En pied de cette section de contact 5, la solution d'amine est collectée dans le système de collecte 11 de la première section de contact 5 de la première série, elle est transportée dans la première conduite de liaison 10 de la première série, et elle alimente le système de distribution de la deuxième section de contact 7 de la première série. Les mêmes moyens sont répétés de manière analogue si la première série comporte une troisième section de contact ou plusieurs sections de contact successives.

De même, toujours dans la situation illustrée, la deuxième conduite d'amenée de liquide 3 alimente le système de distribution 12 de la première section de contact 6 de la deuxième série. En pied de cette section de contact 6, la solution d'amine est collectée dans le système de collecte 18 de la première section de contact 6 de la deuxième série, elle est transportée dans la première conduite de liaison 13 de la deuxième série, et elle alimente le système de distribution de la deuxième section de contact 8 de la deuxième série. Les mêmes moyens sont répétés de manière analogue si la deuxième série comporte une troisième section de contact ou plusieurs sections de contact successives.

L'ensemble constitué d'une conduite de liaison et du système de distribution qu'elle alimente est avantageusement similaire à l'appareillage de distribution de liquide qui a été décrit ci-dessus en référence à la figure 2, et qui est décrit plus en détail dans le document US 2008/0271983. En particulier, avantageusement la conduite de liaison est un tube ou tuyau fermé sur toute sa circonférence, et le système de distribution de liquide comprend un ensemble de tuyaux fermés sur toute leur circonférence, à l'exception seulement des orifices destinés à la sortie du liquide vers le garnissage (et des connexions entre tuyaux).

Avec la disposition décrite ci-dessus, le liquide entre la première section de contact 5 de la première série et la deuxième section de contact 7 de la première série (tout comme, dans le cas illustré, entre la première section de contact 6 de la deuxième série et la deuxième section de contact 8 de la deuxième série) ne passe pas par le lit de garnissage de la section de contact 6 (respectivement 7) située entre ces sections de contact.

De la sorte, il est possible à la fois :
- d'éviter toute perte de place dans l'installation, en minimisant les espaces qui ne sont pas occupés par du garnissage et qui ne sont donc pas dédiés au contact liquide / gaz proprement dit ; et
- de bénéficier d'une pression hydrostatique suffisante dans chaque système de distribution (grâce aux conduites de liaison) pour éviter toute hétérogénéité de distribution avec les mouvements d'ensemble de l'installation.

La dimension verticale des conduites de liaison 10, 13 est adaptée de telle sorte que les différences de hauteur pouvant apparaître entre les extrémités des systèmes de distribution 9, 12 lorsque la colonne est inclinée soient négligeables par rapport à ladite dimension verticale des conduites de liaison 10, 13.

Par exemple, les conduites de liaison peuvent avoir une dimension supérieure à égale à 1 m, ou à 2 m, ou à 3 m, ou à 4 m, selon la direction verticale ; et / ou peuvent être adaptées pour contenir un volume de liquide présentant une dimension selon la direction verticale supérieure à égale à 1 m, ou à 2 m, ou à 3 m, ou à 4 m.

Il apparaît donc que l'installation selon l'invention permet une alimentation uniforme de lits de garnissage au moyen de distributeurs sous pression disposés en alternance avec les lits de garnissages.

En pied de colonne, la solution d'amine issue des deux séries de sections de contact 5, 6, 7, 8 peut être récupérée dans une conduite de collecte de liquide 17 unique. La solution d'amine est ensuite envoyée vers un dispositif de régénération. La conduite de collecte de liquide 17 unique est alimentée d'une part par le liquide directement issu de la section de contact située le plus en pied (dans le cas représenté, il s'agit de la deuxième section de contact 8 de la deuxième série) ; et d'autre part par le liquide issu de la section de contact immédiatement adjacente (dans le cas représenté il s'agit de la deuxième section de contact 7 de la première série), qui est récupéré au moyen d'une dernière conduite de liaison 16.

Selon un autre mode de réalisation, non illustré, la solution d'amine issue de la première série de sections de contact 5, 7 est récupérée en pied de colonne par une première conduite de collecte de liquide, tandis que la solution d'amine issue de la deuxième série de sections de contact 6, 8 est récupérée en pied de colonne par une deuxième conduite de collecte de liquide. Les solutions d'amine récupérées dans ces deux conduites de collecte de liquide sont à des puretés différentes. Il y a donc un gain énergétique si on les introduit séparément dans le dispositif de régénération à des niveaux différents. Ce mode de réalisation suppose la présence d'un ballon de flash par conduite de collecte de liquide. Il est ainsi possible de compenser en partie l'augmentation de consommation de vapeur liée à l'augmentation de débit de solution d'amine.

Toujours en faisant référence à la **figure 3**, chaque conduite de liaison 10, 13, 16 (entre les sections de contact successives au sein de chaque série, et en sortie de l'avant-dernière section de contact de la colonne) traverse la section de contact suivante (c'est-à-dire la section de contact adjacente, en pied de la section de contact dont elle est issue). Lorsque deux conduites de liaison sont présentes à la même cote de la colonne (par exemple les conduites de liaison 10, 13 entre le système de collecte 18 de la première section de contact 6 de la deuxième série et le système de distribution de la deuxième section de contact 7 de la première série), la conception des systèmes de distribution et de collecte peut être telle que ces conduites de liaison sont coaxiales au centre de la colonne.

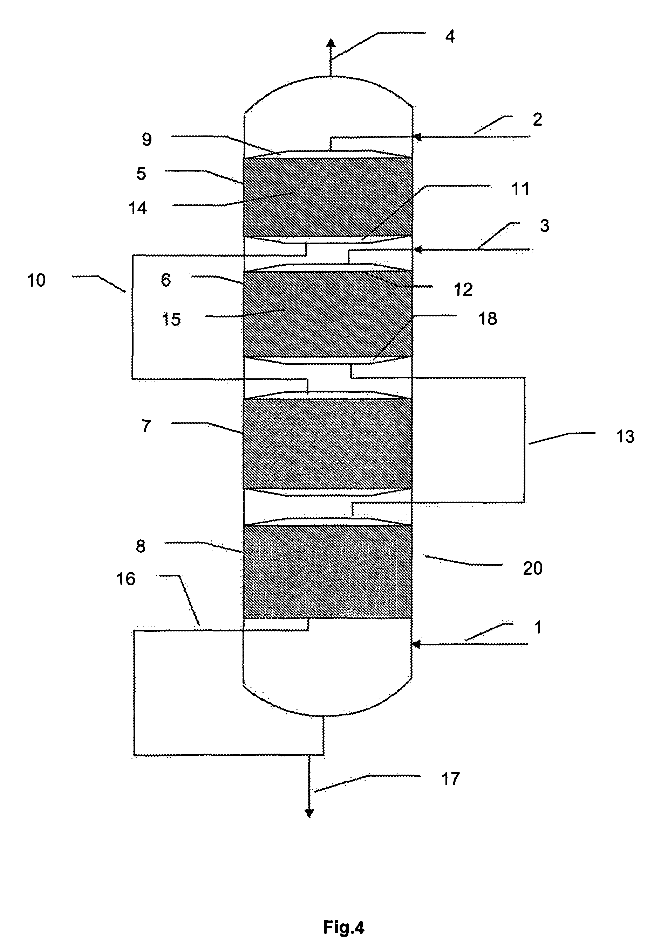

Selon un autre mode de réalisation représenté à la **figure 4** (où les références ont la même signification que ci-dessus), chaque conduite de liaison 10, 13, 16 contourne la section de contact suivante, par exemple en étant disposée au moins partiellement à l'extérieur de l'enceinte 20.

Le mode de réalisation de la **figure 3** permet d'utiliser des enceintes classiques et est donc plus pratique en termes de chaudronnerie et de tubulures. D'un autre côté, le mode de réalisation de la **figure 4** permet d'utiliser des lits de garnissage classiques et de conserver une section maximale pour le garnissage.

Il est possible de prévoir une alimentation par deux solutions d'amine de pureté différente (dans les conduites d'amenée de liquide 2, 3 respectives), ce qui est avantageux si l'on souhaite effectuer une épuration peu poussée du gaz.

Cette installation a été décrite pour une colonne d'absorption avec une solution d'amine mais elle est peut également fournir tout autre type de colonne, par exemple un contacteur gaz-glycol pour le séchage du gaz, une colonne de stabilisation des condensats ou encore une colonne de distillation. Le cas échéant, l'installation est pourvue de moyens complémentaires afin de pouvoir remplir la fonction appropriée, par exemple des moyens de chauffage et / ou des moyens de refroidissement.

### EXEMPLE

Dans l'exemple qui suit, on cherche à extraire du gaz naturel le gaz carbonique contenu.

La composition du gaz naturel est la suivante :

| CONSTITUANT | % MOLAIRE |
|---|---|
| Gaz carbonique | 10,04 |
| Azote | 0,03 |
| Eau | 0,14 |
| Méthane | 81,69 |
| Ethane | 5,53 |
| Propane | 1,65 |
| i-butane | 0,28 |
| n-butane | 0,31 |
| Pentane + | 0,47 |

La teneur à atteindre en tête de colonne pour le gaz épuré est de 50 ppm vol de gaz carbonique dans le gaz. Le débit de gaz naturel à l'entrée de la colonne est 19626 kmol/h.

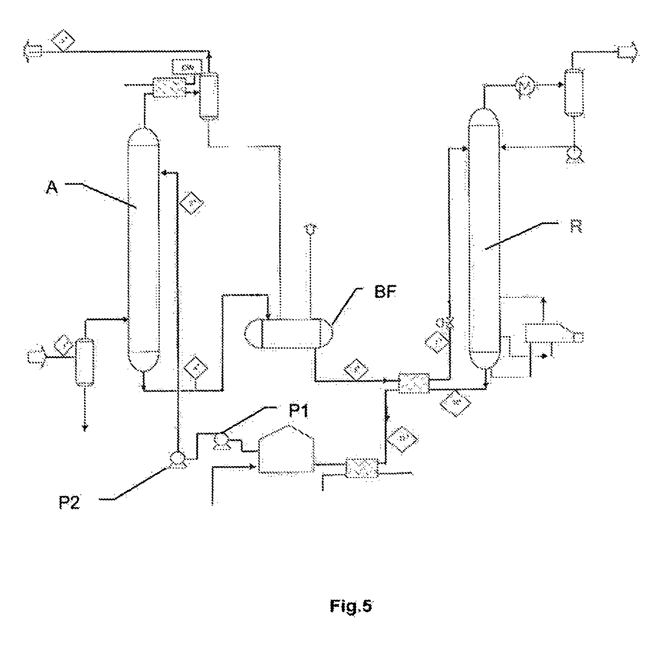

La **figure 5** représente schématiquement une unité d'extraction de gaz acide du gaz naturel. Le gaz naturel contenant des gaz acides 1' entre dans l'absorbeur A. Il y est lavé à contre-courant par la solution d'amine régénérée qui est introduite en 2'. Le gaz épuré sort en 3'. La solution d'amine chargée en gaz acides sort de l'absorbeur en 4', est détendue et dégazée dans le ballon de flash BF. Elle est ensuite réchauffée de 6' en 7' puis entre dans la colonne de régénération R. Elle ressort épurée en gaz acides en 16', refroidie successivement de 16' à 18', pompée par les pompes P1 et P2 jusqu'à la pression de l'absorbeur A et le cycle recommence.

Dans la **figure 5**, l'alimentation de l'absorbeur par la solution d'amine s'effectue de façon unique en tête, selon l'état de la technique. Les distributeurs sont ceux sous pression décrits dans le document US 2008/0271983, avec une hauteur hydrostatique de 4 m environ. Le débit de la solution d'amine 2' est de 1048 t/h.

Si on remplace à présent l'absorbeur A par une installation selon l'invention, on partage le débit de solution d'amine 2' en deux parties identiques qui alimentent séparément l'absorbeur A (par les conduites 2 et 3 de la figure 3 ou 4). Il s'ensuit que le gaz est traité dans la section de contact 6 intermédiaire au moyen d'une solution plus pure que dans la configuration de l'état de la technique mais la pureté finale dans la section de contact 5 supérieure n'est assurée que par une partie du débit. Il résulte de ces deux facteurs agissant en sens contraire que le débit total est augmenté jusqu'à 1415 t/h, soit 707,5 t/h pour chacune des alimentations.

L'augmentation du débit total de solution d'amine a pour corollaire une augmentation de la taille des équipements de régénération (le ballon de flash BF et la colonne de régénération R). Toutefois, l'impact de cette augmentation de taille sur le poids total de l'unité de lavage aux amines reste limité car les équipements de régénération fonctionnent à basse pression.

En revanche, le diamètre d'un absorbeur est le plus souvent déterminé par le débit de solution liquide qui descend le long de la colonne. Comme le débit d'amine est divisé en deux, il s'ensuit que chaque lit n'est traversé que par 707,5 t/h au lieu de 1048 t/h dans le cas de l'état de la technique. Le diamètre de l'absorbeur à haute pression se trouve ainsi réduit.

Enfin, l'utilisation du volume laissé vide par le distributeur de l'état de l'art permet une diminution de la hauteur de l'absorbeur.

Les dimensions et poids des équipements sont résumés dans les tableaux ci-dessous :

**Etat de la technigue :**

| | Diamètre (mm) | Hauteur (mm) | Poids (t) |
|---|---|---|---|
| Absorbeur | 3400 | 41100 | 729 |
| Ballon de flash | 3200 | 9700 | 55 |
| Régénérateur | 4400 | 26500 | 268 |

**Invention :**

| | Diamètre (mm) | Hauteur (mm) | Poids (t) |
|---|---|---|---|
| Absorbeur | 3100 | 34000 | 504 |
| Ballon de flash | 3500 | 10500 | 73 |
| Régénérateur | 4700 | 26500 | 303 |

L'invention fait donc apparaître un gain de masse total de 172 t. Toutefois, le gain en masse sur l'absorbeur qui est l'équipement le plus lourd et le plus difficile à installer est de 225 t. Il s'ensuit une répartition plus équilibrée des masses entre les différents modules du support flottant et une réalisation de l'ensemble plus aisée. De plus, les gains de masse calculés sont relatifs aux équipements de traitement seuls. Ils n'incluent pas ceux de la structure qui les supporte, et dont la masse est environ deux fois celle des équipements. Le gain total est donc de l'ordre de 700 t pour le module supportant l'absorbeur et de 500 t pour l'ensemble de l'unité de lavage aux amines, compte tenu de l'augmentation de la masse des équipements de régénération.

## Revendications

1. Installation de mise en contact entre un liquide et un gaz, comprenant :
- une enceinte (20) comportant un axe vertical ;
- une première série de sections de contact (5, 7) disposées le long de l'axe vertical de l'enceinte (20) ;
- une deuxième série de sections de contact (6, 8) disposées le long de l'axe vertical de l'enceinte (20) de manière alternée par rapport aux sections de contact (5, 7) de la première série ;
- un système de circulation de liquide (2, 3, 10, 13, 16) adapté à faire circuler un liquide dans les sections de contact (5, 7) de la première série d'une part et dans les sections de contact (6, 8) de la deuxième série d'autre part, de façon séparée.

2. Installation selon la revendication 1, dans laquelle chaque section de contact (5, 6) comprend un système de distribution de liquide (9, 12), un système de collecte de liquide (11, 18) et un garnissage (14, 15) disposé entre le système de distribution de liquide (9, 12) et le système de collecte de liquide (11, 18).

3. Installation selon la revendication 2, dans laquelle le garnissage (14, 15) est de type structuré ou en vrac.

4. Installation selon l'une des revendications 1 à 3, comprenant des conduites de liaison (10, 13) adaptées à transporter le liquide entre les sections de contact (5, 7) successives de la première série d'une part, et entre les sections de contact (6, 8) successives de la deuxième série d'autre part.

5. Installation selon l'une des revendications 1 à 4, dans laquelle les conduites de liaison (10) entre les sections de contact (5, 7) de la première série traversent les sections de contact (6) de la deuxième série ; et les conduites de liaison (13) entre les sections de contact (6, 8) de la deuxième série traversent les sections de contact (7) de la première série.

6. Installation selon l'une des revendications 1 à 5, dans laquelle les conduites de liaison (10, 13) sont disposées au moins en partie à l'extérieur de l'enceinte (20).

7. Installation selon l'une des revendications 1 à 6, comprenant :
- une première conduite d'amenée de liquide (2) alimentant une section de contact (5) de la première série ;
- une deuxième conduite d'amenée de liquide (3) alimentant une section de contact (6) de la deuxième série ;
- des moyens de collecte de liquide (17) à une extrémité inférieure de l'enceinte (20).

8. Installation selon l'une des revendications 1 à 7, comprenant :
- une conduite d'amenée de gaz (1) unique à une extrémité inférieure de l'enceinte (20) ;
- une conduite de collecte de gaz (4) unique à une extrémité supérieure de l'enceinte (20).

9. Installation selon l'une des revendications 1 à 8, qui est une installation de distillation ou une installation de séchage de mélange gazeux ou une installation de désacidification de mélange gazeux, et de préférence est une installation de distillation d'hydrocarbures ou une installation de séchage de gaz naturel ou une installation de désacidification de gaz naturel.

10. Procédé de mise en contact d'un liquide et d'un gaz, comprenant l'alimentation d'une installation selon l'une des revendications 1 à 9 en gaz et en liquide, et éventuellement la collecte de gaz et de liquide issus de l'installation.

11. Procédé selon la revendication 10, qui est un procédé de désacidification de mélange gazeux, dans lequel le gaz alimentant l'installation est de préférence du gaz naturel et le liquide alimentant l'installation est une solution basique, comprenant de préférence un composé amine.

12. Procédé selon la revendication 10, qui est un procédé de séchage de mélange gazeux, dans lequel le gaz alimentant l'installation est de préférence du gaz naturel et le liquide alimentant l'installation est un liquide hygroscopique, comprenant de préférence un composé glycol.

13. Procédé selon la revendication 10, qui est un procédé de distillation d'hydrocarbures.

14. Procédé selon l'une des revendications 10 à 13, qui est mis en oeuvre en mer sur un support flottant.

## Patentansprüche

1. Vorrichtung zur Herstellung eines Kontaktes zwischen einer Flüssigkeit und einem Gas, umfassend:
- ein Gehäuse (20), das eine vertikale Achse umfasst;
- eine erste Reihe von Kontaktabschnitten (5, 7), die entlang der vertikalen Achse des Gehäuses (20) angeordnet sind;
- eine zweite Reihe von Kontaktabschnitten (6, 8), die in Bezug auf Kontaktabschnitte (5, 7) der ersten Reihe abwechselnd entlang der vertikalen Achse des Gehäuses (20) angeordnet sind;
- ein System zur Flüssigkeitszirkulation (2, 3, 10, 13, 16), das angepasst ist, um eine Flüssigkeit einerseits in den Kontaktabschnitten (5, 7) der ersten Reihe und andererseits in den Kontaktabschnitten (6, 8) der zweiten Reihe getrennt zirkulieren zu lassen.

2. Vorrichtung nach Anspruch 1, wobei jeder Kontaktabschnitt (5, 6) ein System zur Verteilung von Flüssigkeit (9, 12), ein System zum Sammeln von Flüssigkeit (11, 18) und eine Packung (14, 15) umfasst, die zwischen dem System zur Verteilung von Flüssigkeit (9, 12) und dem System zum Sammeln von Flüssigkeit (11, 18) angeordnet ist.

3. Vorrichtung nach Anspruch 2, wobei die Packung (14, 15) eine strukturierte Packung oder eine lose Packung ist.

4. Vorrichtung nach einem der Ansprüche 1 bis 3, umfassend Verbindungsleitungen (10, 13), die angepasst sind, um die Flüssigkeit einerseits zwischen den aufeinander folgenden Kontaktabschnitten (5, 7) der ersten Reihe und andererseits zwischen den aufeinander folgenden Kontaktabschnitten (6, 8) der zweiten Reihe zu transportieren.

5. Vorrichtung nach einem der Ansprüche 1 bis 4, wobei die Verbindungsleitungen (10) zwischen den Kontaktabschnitten (5, 7) der ersten Reihe die Kontaktabschnitte (6) der zweiten Reihe durchqueren; und die Verbindungsleitungen (13) zwischen den Kontaktabschnitten (6, 8) der zweiten Reihe die Kontaktabschnitte (7) der ersten Reihe durchqueren.

6. Vorrichtung nach einem der Ansprüche 1 bis 5, wobei die Verbindungsleitungen (10, 13) mindestens teilweise außerhalb des Gehäuses (20) angeordnet sind.

7. Vorrichtung nach einem der Ansprüche 1 bis 6, umfassend:
- eine erste Leitung zum Zuführen von Flüssigkeit (2), die einen Kontaktabschnitt (5) der ersten Reihe versorgt;
- eine zweite Leitung zum Zuführen von Flüssigkeit (3), die einen Kontaktabschnitt (6) der zweiten Reihe versorgt;
- Mittel zum Sammeln von Flüssigkeit (17) an einem unteren Ende des Gehäuses (20).

8. Vorrichtung nach einem der Ansprüche 1 bis 7, umfassend:
- eine einzige Leitung zum Zuführen von Gas (1) an einem unteren Ende des Gehäuses (20);
- eine einzige Leitung zum Sammeln von Gas (4) an einem oberen Ende des Gehäuses (20).

9. Vorrichtung nach einem der Ansprüche 1 bis 8, bei der es sich um eine Destillationsvorrichtung zur oder eine Trocknungsvorrichtung eines gasförmigen Gemischs oder um eine Entsäuerungsvorrichtung eines gasförmigen Gemischs handelt, und bevorzugt handelt es sich um eine Destillationsvorrichtung von Kohlenwasserstoffen oder eine Trocknungsvorrichtung von Erdgas oder eine Entsäuerungsvorrichtung von Erdgas.

10. Verfahren zum Herstellen eines Kontaktes zwischen einer Flüssigkeit und einem Gas, umfassend die Versorgung einer Vorrichtung nach einem der Ansprüche 1 bis 9 mit Gas und mit Flüssigkeit und gegebenenfalls das Sammeln von Gas und von Flüssigkeit, die aus der Vorrichtung stammen.

11. Verfahren nach Anspruch 10, bei dem es sich um ein Verfahren zum Entsäuern eines gasförmigen Gemischs handelt, wobei das Gas, das die Vorrichtung versorgt, bevorzugt Erdgas ist, und die Flüssigkeit, die die Vorrichtung versorgt, eine basische Lösung ist, die bevorzugt eine Aminverbindung umfasst.

12. Verfahren nach Anspruch 10, bei dem es sich um ein Verfahren zum Trocknen eines gasförmigen Gemischs handelt, wobei das Gas das die Vorrichtung versorgt, bevorzugt Erdgas ist, und die Flüssigkeit, die die Vorrichtung versorgt, eine hygroskopische Flüssigkeit ist, die bevorzugt eine Glycolverbindung umfasst.

13. Verfahren nach Anspruch 10, bei dem es sich um ein Verfahren zur Destillation von Kohlenwasserstoffen handelt.

14. Verfahren nach einem der Ansprüche 10 bis 13, das im Meer auf einer schwimmenden Plattform eingesetzt wird.

## Claims

1. A unit for establishing contact between a liquid and a gas, comprising:
- a chamber (20) having a vertical axis;
- a first series of contact sections (5, 7) positioned along the length of the vertical axis of the chamber (20);
- a second series of contact sections (6, 8) positioned along the length of the vertical axis of the chamber (20), alternated with the contact sections (5, 7) of the first series;
- a liquid circulation system (2, 3, 10, 13, 16) adapted for circulating a liquid in the contact sections (5, 7) of the first series and in the contact sections (6, 8) of the second series in a separate manner.

2. The unit according to claim 1, wherein each contact section (5, 6) comprises a liquid distribution system (9, 12), a liquid collection system (11, 18), and packing (14, 15) positioned between the liquid distribution system (9, 12) and the liquid collection system (11, 18).

3. The unit according to claim 2, wherein the packing (14, 15) is of the structured or random type.

4. The unit according to one of claims 1 to 3, comprising connecting ducts (10, 13) adapted for conveying the liquid between the successive contact sections (5, 7) of the first series on the one hand, and between the successive contact sections (6, 8) of the second series on the other hand.

5. The unit according to one of claims 1 to 4, wherein the connecting ducts (10) between the contact sections (5, 7) of the first series pass through the contact sections (6) of the second series; and the connecting ducts (13) between the contact sections (6, 8) of the second series pass through the contact sections (7) of the first series.

6. The unit according to one of claims 1 to 5, wherein the connecting ducts (10, 13) are at least partially arranged outside the chamber (20).

7. The unit according to one of claims 1 to 6, comprising:
- a first liquid intake duct (2) feeding a contact section (5) of the first series;
- a second liquid intake duct (3) feeding a contact section (6) of the second series;
- liquid collection means (17) at a lower end of the chamber (20).

8. The unit according to one of claims 1 to 7, comprising:
- a single gas intake duct (1) at a lower end of the chamber (20);
- a single gas collection duct (4) at an upper end of the chamber (20).

9. The unit according to one of claims 1 to 8, which is a distillation unit or a drying unit for a gaseous mixture or a deacidification unit for a gaseous mixture, and preferably is a hydrocarbon distillation unit or a natural gas drying unit or a natural gas deacidification unit.

10. A method for establishing contact between a liquid and a gas, comprising feeding a unit according to one of claims 1 to 9 with gas and liquid, and optionally collecting gas and liquid coming from the unit.

11. The method according to claim 10, which is a method for deacidifying a gaseous mixture, in which the gas feeding the unit is preferably natural gas and the liquid feeding the unit is a basic solution, preferably comprising an amine compound.

12. The method according to claim 10, which is a method for drying a gaseous mixture, in which the gas feeding the unit is preferably natural gas and the liquid feeding the unit is a hygroscopic liquid, preferably comprising a glycol compound.

13. The method according to claim 10, which is a hydrocarbon distillation method.

14. The method according to one of claims 10 to 13, which is implemented offshore using a floating platform.
